# EUROPEAN PATENT SPECIFICATION

(11) **EP 1 684 185 B1**
(45) Date of publication and mention of the grant of the patent: **12.03.2008**
(21) Application number: 06100619.3
(22) Date of filing: 19.01.2006
(51) Int. Cl.: G06F 13/38

(54) **Optical disk drive**
Optisches Festplattenlaufwerk
Lecteur de disque optique

(30) Priority: 21.01.2005 JP 2005014082
(43) Date of publication of application: 26.07.2006
(73) Proprietor: Toshiba Samsung Storage Technology Corporation, Kawasaki City, Kanagawa 212-0013 (JP)
(72) Inventor: Suyama, Takaaki, Kawasaki-City, Kanagawa 212-0013 (JP)
(74) Representative: Henkel, Feiler & Hänzel

(56) References cited:
- EP-A- 0 943 999
- JP-A- 57 039 445
- JP-A- 57 161 924

## Description

### BACKGROUND OF THE INVENTION

### 1. Field of the Invention

The present invention relates to an optical disk drive which is an IDE device and, more particularly, an optical disk drive characterized by a recognition means needed for the disk drive to connect to a plurality of PCs and an internal setting method.

### 2. Description of the Related Art

Many PCs (Personal Computers) are provided with two IDE (Integrated Drive Electronics) ports on ATAPI (AT attachment packet interface) interface for connection to peripheral devices other than a hard disk drive. One is called "Primary IDE" and the other "Secondary IDE". Both the Primary and Secondary can connect to up to two IDE devices such as a hard disk drive or optical disk drive. The two IDE devices are called "device 0 (or Master)" and "device 1 (or Slave)", respectively. In the case where two IDE devices are connected to one IDE port, the two IDE devices are set to device 0 and device 1, respectively for identification so that a conflict does not occur.

In general, the IDE port and IDE device are connected to each other by a cable. In the case of a notebook type PC, however, they may be connected to each other by a flexi-cable or they may be directly connected to a connector in some cases in view of the space saving requirements.

In the case of a half-height IDE device used mainly in a desktop PC, a general setting method is that one side on which a signal terminal called CSEL (Cable Select) extending from a connector by a cable is connected to GND is set to device 0, and the other side on which the CSEL is open is set to device 1. Alternatively, a short jumper pin is used to forcibly set the respective IDE devices.

In the case of a slim-type IDE device used mainly in a notebook type PC, a jumper pin is not provided for the purpose of space-saving but only a terminal for the CSEL signal is used to realize the setting, in general. Since many slim-type IDE devices are customized in accordance with specifications of PC manufacturers, the polarity of the CSEL signal may differ depending on the PC to be connected. In such a case, there is a possibility that an IDE device that is recognized as device 0 in a given PC may be recognized as device 1 in another PC. If the polarity of the CSEL signal is reversed, a BIOS (Basic Input/Output System) of a PC cannot recognize the IDE device or recognizes that two drive apparatuses are connected thereto, resulting in occurrence of a conflict.

In order to cope with such a circumstance, a firmware that adversely determines the polarity of the CSEL signal of an optical disk drive has been prepared and the entire firmware of the optical disk drive has been rewritten.

The firmware of the optical disk drive needs to previously be rewritten for a PC having different CSEL signal polarity, so that it takes a lot of trouble to make the PC to recognize the optical disk drive connected thereto. That is, in this case, it has been necessary to remove the optical disk drive from the PC, connect it to another PC, and rewrite the firmware thereof compatible with the another PC. However, in such a case as that an average user becomes aware of the trouble only after he or she has purchased the optical disk drive in the shop and connected it to his or her own PC at home, the purchased optical disk drive cannot be recognized by the PC, so that the firmware thereof cannot be rewritten on the spot. Consequently, the user needs to go to the shop once again to cause a lot of trouble for both the user and shop. Even if the purchased optical disk can be recognized, the firmware and a rewrite tool are required.

Relevant prior art is disclosed by JP 57161924.

### SUMMARY OF THE INVENTION

An object of the present invention is to provide an optical disk drive capable of operating even when it is connected to any of PCs having different CSEL signal polarity and eliminating the need of preparing another PC used for rewriting the firmware thereof in accordance with a PC on which the optical disk drive actually operates.

According to the present invention, there is provided an optical disk drive to be connected to an IDE port of a personal computer as device 0 or device 1, depending on the polarity of a CSEL signal, comprising;
(1) a determination means for determining whether the optical disk drive is being recognized or not by the personal computer,
(2) a firmware which determines the polarity of the CSEL signal;
(3) an input means for inputting an instruction to rewrite the setting part in the firmware when needed; and
(4) a rewrite means for receiving the instruction from the input means and rewriting only a part relating to the CSEL signal polarity determination in the firmware.

### BRIEF DESCRIPTION OF THE DRAWINGS

Further objects and advantages of the invention can be more fully understood from the following detailed description taken in conjunction with the accompanying drawings, in which:
FIG. 1 is a view showing connection state between a PC and a hard disk drive and optical disk drive incorporated in the PC;
FIG. 2 is a flowchart for explaining a process of setting the above drives to device 0 or device 1 depending on the determination of a CSEL signal;
FIG. 3 is a flowchart for explaining a process of recognizing the optical disk drive connected to the PC; and
FIG. 4 is a perspective view schematically showing the optical disk drive.

### DETAILED DESCRIPTION OF THE PREFERRED EMBODIMENTS

An embodiment of the present invention will be described below with reference to the accompanying drawings.

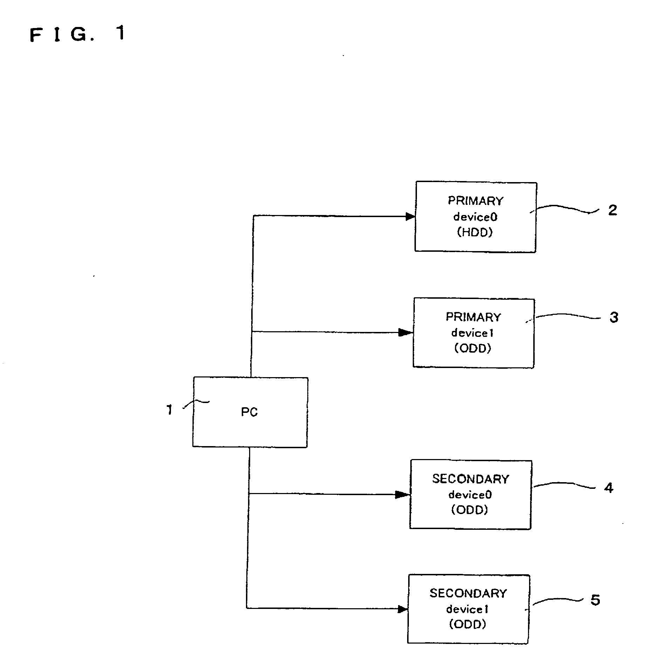

FIG. 1 is a view showing connection state between a PC and a hard disk drive and optical disk drive incorporated in the PC.

A PC 1 includes a motherboard (not shown) on which a CPU (Central Processing Unit) module, a RAM (Random Access Memory) module, and the like are mounted. Primary and Secondary IDE ports are provided on the motherboard. A hard disk drive 2 (HDD) and an optical disk drive 3 are connected as device 0 and device 1, respectively, to the Primary port via a cable or flexi-cable or by direct connecter connection. Similarly, optical disk drives 4 and 5 are connected as device 0 and device 1 to the Secondary port. Whether the above drives are set to device 0 or device 1 is determined, after power-on operation, depending on the polarity of a CSEL signal input thereto via a cable and the like.

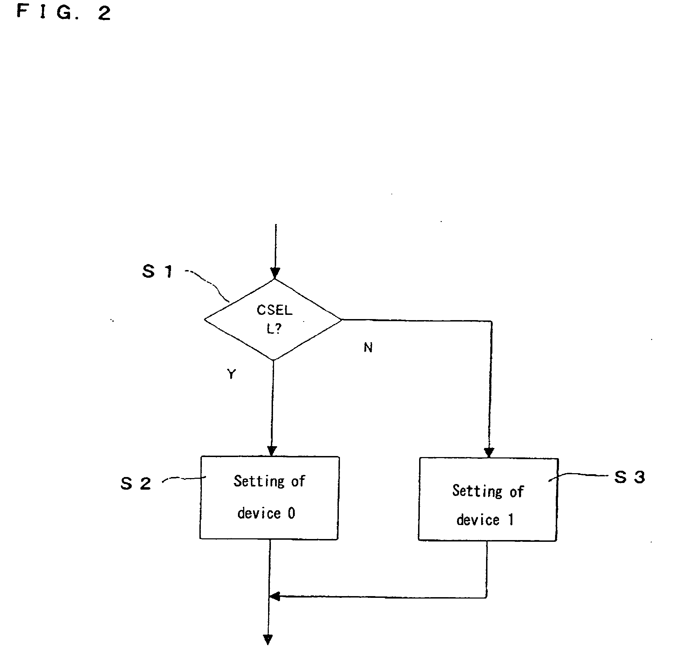

FIG. 2 shows a flowchart for explaining a process of setting the above drives to device 0 or device 1 depending on the determination of the CSEL signal. It is assumed that the CSEL setting in the PC 1 is a standard one, that is, it is adopted in a large number of PCs. Firstly, in step S1, it is determined whether the CSEL signal polarity of the PC 1 is L (Low) or not. When it is determined that the polarity is L, the flow advances to step S2, where the optical disk drive to be connected is set to device 0. When it is determined that the CSEL signal polarity of the PC 1 is H (High), the flow advances to step S3, where the optical disk drive to be connected is set to device 1.

In the case where the CSEL setting in the PC 1 is a reversed one of the standard setting, that is, the setting being adopted in a large number of PCs, it is necessary to reverse the determination branch of the flowchart shown in FIG. 2. In this case, a firmware constituted by, e.g., a rewritable flush ROM is to be rewritten.

When disk drives with a standard firmware are connected to the PC 1 even though the CSEL setting in the PC 1 is the reversed one, the hard disk drive 2 and optical disk drive 3 are both set to device 0 in the Primary port to cause a conflict, with the result that the PC 1 itself is not started. This is also true in the case where two optical disk drives 4 and 5 are connected through the Secondary port. In the case where only one optical disk drive is connected to the Secondary port, the optical disk drive is not set to the original setting (device 0), but set to device 1. In this case, however, BIOS menu of the PC may determine that no drive is connected to the Secondary port due to absence of device 0 to be connected to the Secondary port. As a result, there is a possibility that the optical disk drive 4 cannot be recognized.

In the present invention, only the determination part of the flowchart of FIG. 2 is allowed to be individually rewritten. In this case, a user rewrites the determination part through a user-settable input means such as an eject button to reverse Y, N of the determination part shown in FIG. 2. As a result, it becomes possible for the PC that could not recognize the ICE drive to recognize it.

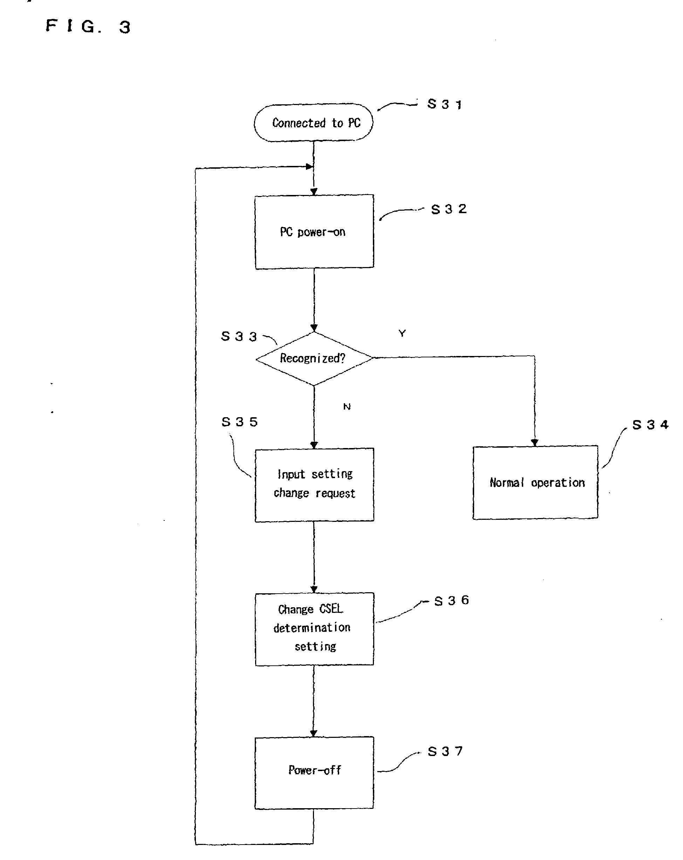

A process of recognizing the optical disk drive connected to the PC will next be described in detail with reference to the flowchart of FIG. 3.

Firstly, in step S31, the optical disk drive is connected to the IDE port of the PC via a cable or the like. In step S32, the PC is powered on. In step S33, it is determined whether the PC and BIOS can recognize the optical disk drive connected to the IDE port. When it is determined that the PC and BIOS can recognize the optical disk drive, the flow advances to step S34. In this case, the connection between the PC and optical disk drive is normal and a change of the setting is not required.

In step S33, when it is determined that the PC and BIOS cannot recognize the optical disk drive connected to the IDE port, the flow advances to step S35. In this case, a change of the setting for the determination part is required and the user requests the setting change in step S35. In step S36, the CSEL signal determination part shown in step S1 of FIG. 2 is changed in the optical disk drive. After completion of the setting change, the PC is powered off in step S37 and the flow returns to step S32. The PC is powered on once again in step S32, and it is determined once again in step S33 whether the BIOS and OS can recognize the optical disk drive connected to the IDE port. The reverse of the polarity allows the BIOS and OS of the PC to recognize the optical disk drive. This is regarded as a normal operation and the flow advances to step S34.

As the method of changing the determination part used in step S36, other different methods can be adopted depending on the characteristics of a device storing a firmware. In the case of, e.g., a device in which several tens of bytes of the firmware can be rewritten, only the corresponding part is subjected to rewriting. In the case of a device in which several kilobytes or more of the firmware can be rewritten or a device in which the entire firmware can be rewritten, the number of times of rewriting operation is previously determined and the rewriting operation is performed with the number of times thereof recorded each time. In the case of a configuration including a plurality of flash ROMs, the configuration is allowable in which a part indicating the polarity is given to a flush ROM in which several tens of bytes of the firmware can be rewritten and the determination part is given to another flash ROM. Note that approximately 10 times is sufficient for the rewriting operation.

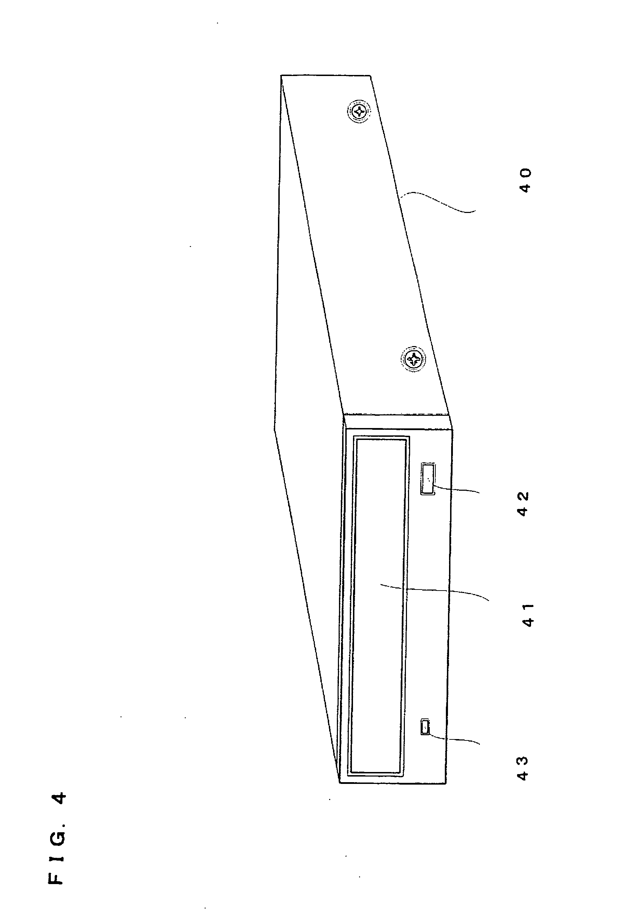

The input process performed in step S35 will be described with reference to FIG. 4. FIG. 4 is a perspective view schematically showing an optical disk drive. An optical disk drive 40 has, at the front portion thereof, a disk tray 41 on which an optical disk is placed, an eject button 42 which is effective only while a power is supplied to the drive and is operated by a user for open/close of the disk tray, and an indicator 43 indicating the operation state of the optical disk drive. Although not shown, the optical disk drive 40 may have a headphone jack for connecting a headphone or mini speaker, a volume controller for controlling the output from the headphone jack, and an emergency eject hole used only when the disk tray cannot be opened by depression of the eject button.

When the firmware needs to be rewritten in the optical disk drive, it is preferable that the rewriting operation be started with an operation that is not performed in a normal use state as a trigger. This is preferable from a viewpoint of avoidance of wrong operation. For example, it is preferable to make an interval at which the eject button 42 is depressed constant, or it is preferable to perform operation with a drawer left opened. As the operation pattern for the eject button 42, a pattern of, e.g., depression for 15 seconds - release for 5 seconds - depression for 3 seconds can be considered. Such an operation pattern indicates an input for changing the CSEL determination setting.

Further, it is effective to perform the rewriting operation by inserting a CD-ROM medium for CSEL standard setting only or a CD-ROM medium for CSEL reversed setting only. They may be used together. Further, it is effective to use an indicator such as an LED provided on the front panel of the optical disk drive to notify a user that the preparation of the rewriting operation has completed for reconfirmation of the availability of the rewriting operation before the rewriting operation.

In the case where a normal recognition state can be obtained, it is effective to provide a means for inhibiting rewriting of the firmware in order to prevent a recognition failure from occurring due to unnecessary rewriting. For example, it is preferable to inhibit the rewriting when a device (drive) itself confirms that a command issuance is correctly made by the OS of the PC and the corresponding reply is correctly made by the device.

As described above in detail, according to the embodiment of the present invention, it is possible to obtain an optical disk drive capable of being recognized by a PC to which the disk drive is connected even when it is connected to any of PCs having different CSEL signal polarity even through a firmware of the disk drive is not rewritten.

## Claims

1. An optical disk drive to be connected to an IDE port of a personal computer as device 0 or device I, depending on the polarity of a CSEL signal, comprising;
determination means for determining whether the optical disk drive is being recognized or not by the personal computer; **characterized in** further comprising :
a firmware which determines the polarity of the CSEL signal;
input means for inputting an instruction to rewrite the setting part in the firmware when needed; and
rewrite means for receiving the instruction from the input means and rewriting only a part relating to the CSEL signal polarity determination in the firmware.

2. The optical disk drive according to claim 1, wherein
the input means is an eject button performed with a predetermined operation pattern.

3. The optical disk drive according to claim 1, comprising inhibition means for inhibiting rewriting of the setting part in the firmware in the case where the optical disk drive is normally recognized by the personal computer.

4. The optical disk drive according to claim 1, comprising confirmation means for reconfirming the availability of rewriting operation at the time of rewriting the setting part in the firmware to prevent wrong operation.

## Patentansprüche

1. Optikplattenlaufwerk, das mit einem IDE-Port eines Personalcomputers als Vorrichtung 0 oder Vorrichtung 1 abhängig von der Polarität eines CSEL-Signals zu verbinden ist, mit :
einem Bestimmungsmittel zum Bestimmen, ob das Optikplattenlaufwerk durch den Personalcomputer erkannt wird oder nicht; ferner **gekennzeichnet durch**
eine Firmware, die die Polarität des CSEL-Signals bestimmt;
einem Eingabemittel zum Eingeben einer Anweisung, um den Einstellteil in der Firmware nach Bedarf zu überschreiben; und
einem Überschreibmittel zum Empfangen der Anweisung von dem Eingabemittel und zum Überschreiben lediglich eines Teils, der sich auf die CSEL-Signalpolaritätsbestimmung in der Firmware bezieht.

2. Optikplattenlaufwerk gemäß Anspruch 1, bei dem
das Eingabemittel ein Auswurfknopf ist, der mit einem vorbestimmten Betriebsmuster arbeitet.

3. Optikplattenlaufwerk gemäß Anspruch 1, mit einem Sperrmittel zum Sperren des Überschreibens des Einstellteils in der Firmware in dem Fall, in dem das Optikplattenlaufwerk normale durch den Personalcomputer erkannt wird.

4. Optikplattenlaufwerk gemäß Anspruch 1, mit einem Bestätigungsmittel zum nochmaligen Bestätigen der Verfügbarkeit des Überschreibvorgangs zur Zeit des Überschreibens des Einstellteils in der Firmware, um einen falschen Vorgang zu verhindern.

## Revendications

1. Lecteur de disque optique à connecter à un port IDE d'un ordinateur personnel en tant que dispositif 0 ou que dispositif 1 selon la polarité d'un signal CSEL, comprenant :
un moyen de détermination pour déterminer si oui ou non le lecteur de disque optique est reconnu par l'ordinateur personnel ; **caractérisé en ce qu'**il comprend en outre :
un microcode qui détermine la polarité du signal CSEL ;
un moyen d'entrée pour la fourniture en entrée d'une instruction afin de réécrire la partie réglée dans le microcode lorsque cela est nécessaire ; et
un moyen de réécriture pour recevoir l'instruction du moyen d'entrée et ne réécrire qu'une partie concernant la détermination de la polarité du signal CSEL dans le microcode.

2. Lecteur de disque optique suivant la revendication 1, dans lequel :
le moyen d'entrée est un bouton d'éjection mis en oeuvre selon une séquence d'opérations déterminée à l'avance.

3. Lecteur de disque optique suivant la revendication 1, comprenant un moyen d'inhibition pour inhiber la réécriture de la partie réglée dans le microcode dans le cas où le lecteur de disque optique est normalement reconnu par l'ordinateur personnel.

4. Lecteur de disque optique suivant la revendication 1, comprenant un moyen de confirmation pour confirmer de nouveau la disponibilité de l'opération de réécriture au moment de la réécriture de la partie réglée dans le microcode pour éviter une opération erronée.
